# EUROPEAN PATENT SPECIFICATION

(11) **EP 4 064 017 B1**
(45) Date of publication and mention of the grant of the patent: **19.03.2025**
(21) Application number: 21194261.0
(22) Date of filing: 01.09.2021
(51) Int. Cl.: G06F 3/04817, G06F 3/0482, G06F 3/0483

(54) **INFORMATION PROCESSING APPARATUS, PROGRAM, AND INFORMATION PROCESSING METHOD**
INFORMATIONSVERARBEITUNGSVORRICHTUNG, PROGRAMM UND INFORMATIONSVERARBEITUNGSVERFAHREN
APPAREIL DE TRAITEMENT D'INFORMATIONS, PROCÉDÉ DE TRAITEMENT D'INFORMATIONS ET PROGRAMME

(30) Priority: 26.03.2021 JP 2021052799
(43) Date of publication of application: 28.09.2022
(73) Proprietor: FUJIFILM Business Innovation Corp., Minato-ku Tokyo (JP)
(72) Inventor: OISHI, Kuniko, Yokohama-shi (JP); TANIZAKI, Kosuke, Yokohama-shi (JP); KIRIKAWA, Shota, Yokohama-shi (JP); KOBAYASHI, Kazuhide, Yokohama-shi (JP)
(74) Representative: Becker, Eberhard

(56) References cited:
- EP-A1- 2 017 709
- JP-A- 2013 077 312

## Description

### BACKGROUND OF THE INVENTION

### (i) Field of the Invention

The present invention relates to an information processing apparatus, a program, and an information processing method.

### (ii) Description of Related Art

JP4821529B describes a configuration in which based on operation information on a thumbnail image of a user on a screen in which an image based on document data and the thumbnail image are displayed, a display magnification in a case of enlarging and displaying the image is determined, and a menu is provided at an upper portion of the enlarged and displayed image according to the determined display magnification.
JP 2013 077312 A discloses an electronic device and a display method. When a pointer is pointed onto an icon of a file, a tool chip including file information, such as an update date and a size of an object file, and a preview representing contents of the object file is displayed.

### SUMMARY OF THE INVENTION

In an aspect, in a case where an instruction image of a document on the screen is selected, a document image related to the selected document is displayed. In this aspect, a menu image for accepting an operation or editing on the document is fixedly displayed on, for example, one side or the like of an upper portion of an area of the document image. Meanwhile, in a case where a display position of the instruction image of the document is within a lower portion of the screen, a distance from the instruction image of the document in this lower portion area to the menu image in the upper portion area becomes longer, and operability of the user is reduced.

An object of the present invention is to improve operability of a user as compared with a case where a display position of an instruction image of a document displayed on a screen is not considered in a case of displaying a menu image for accepting an operation or editing of the document.

The present invention is provided in the appended claims. The following disclosure serves a better understanding of the present invention. According to a first aspect of the present disclosure, there is provided an information processing apparatus including: a processor configured to: display an instruction image for accepting an instruction of a user on a document on an operation screen for accepting an operation by the user; display a document image related to the document according to the instruction of the user on the instruction image; and display a menu image for accepting the operation of the user on the document image at a position determined by a display position of the instruction image on the operation screen.

According to a second aspect of the present disclosure, in the information processing apparatus according to the first aspect, the processor may be configured to: in a case where a cursor is located over the instruction image, start displaying the document image.

According to a third aspect of the present disclosure, in the information processing apparatus according to the first or second aspect, the processor may be configured to: display the menu image in an area for displaying the document image.

According to a fourth aspect of the present disclosure, in the information processing apparatus according to the third aspect, the processor may be configured to: display the document image at a center portion in the area for displaying the document image, and display the menu image in an end area of the area for displaying the document image.

According to a fifth aspect of the present disclosure, in the information processing apparatus according to the third aspect, the processor may be configured to: in a case where the display position of the instruction image is located above the area for displaying the document image, display the menu image on an upper side in the area for displaying the document image; and in a case where the display position of the instruction image is below the area for displaying the document image, display the menu image on a lower side in the area the document image is displayed.

According to a sixth aspect of the present disclosure, in the information processing apparatus according to the third aspect, the processor may be configured to: in a case where the display position of the instruction image is on the left of the area for displaying the document image, display the menu image on a left side in the area for displaying the document image; and in a case where the display position of the instruction image is on the right of the area for displaying the document image, display the menu image on a right side in the area the document image is displayed.

According to a seventh aspect of the present disclosure, in the information processing apparatus according to any one of the third to sixth aspects, the processor may be configured to: display the menu image at a position close to the instruction image.

According to an eighth aspect of the present disclosure, in the information processing apparatus according to the first or second aspect, the processor may be configured to: change the display of the menu image based on a position of a cursor operated by the user.

According to a ninth aspect of the present disclosure, in the information processing apparatus according to the eighth aspect, the processor may be configured to: display the menu image in the area for displaying the document image; and in a case where the position of the cursor is not in the area for displaying the document image, not display the menu image.

According to a tenth aspect of the present disclosure, in the information processing apparatus according to the eighth aspect, the processor may be configured to: display the menu image in the area for displaying the document image; and change a transparency of the menu image based on whether or not the position of the cursor is over the menu image.

According to an eleventh aspect of the present disclosure, in the information processing apparatus according to the tenth aspect, the processor may be configured to: in a case where the position of the cursor is not over the menu image, transparently display the menu image.

According to a twelfth aspect of the present disclosure, in the information processing apparatus according to the tenth aspect, the processor may be configured to: in a case where the position of the cursor is over the menu image, display the menu image by lowering a transparency than the transparency of the menu image in a case where the position of the cursor is not over the menu image.

According to a thirteenth aspect of the present disclosure, in the information processing apparatus according to the first or second aspect, the processor may be configured to: change the display of the menu image based on a size of the operation screen.

According to a fourteenth aspect of the present disclosure, in the information processing apparatus according to the thirteenth aspect, the processor may be configured to: in a case where the operation screen is smaller than a predetermined value, change a shape of the menu image and display the menu image.

According to a fifteenth aspect of the present disclosure, in the information processing apparatus according to the thirteenth aspect, the processor may be configured to: in a case where the operation screen is smaller than a predetermined value and a partial area of the menu image is displayed, shift the area to be displayed of the menu image.

According to a sixteenth aspect of the present disclosure, in the information processing apparatus according to the first or second aspect, the processor may be configured to: in a case where the document has a plurality of pages, not change the display position of the menu image even in a case where the page to be displayed in the document image is changed.

According to a seventeenth aspect of the present disclosure, in the information processing apparatus according to the sixteenth aspect, the processor may be configured to: display a change button image that is an image to be displayed in an area of the menu image and accepts an operation of changing the page to be displayed in the document image from the user.

According to an eighteenth aspect of the present disclosure, there is provided a program causing a computer to realize: a function of displaying an instruction image for accepting an instruction of a user on a document on an operation screen for accepting an operation by the user; a function of displaying a document image related to the document according to the instruction of the user on the instruction image; and a function of displaying a menu image for accepting the operation of the user on the document image at a position determined by a display position of the instruction image on the operation screen.

According to a nineteenth aspect of the present disclosure, there is provided an information processing method including: displaying an instruction image for accepting an instruction of a user on a document on an operation screen for accepting an operation by the user; displaying a document image related to the document according to the instruction of the user on the instruction image; and displaying a menu image for accepting the operation of the user on the document image at a position determined by a display position of the instruction image on the operation screen.

According to the first aspect of the present disclosure, the eighteenth aspect of the present disclosure, and the nineteenth aspect of the present disclosure, it is possible to improve operability of the user, as compared with a case where the display position of the instruction image of the document displayed on the screen is not considered in a case of displaying the menu image for accepting an operation or editing of the document.

According to the second aspect of the present disclosure, it is possible to improve the operability of the user, as compared with a case where the document image is not displayed even in a case where the cursor is located over the instruction image.

According to the third aspect of the present disclosure, it is possible to reduce a space on the operation screen, as compared with a case where the menu image is displayed in an area different from the area in which the image of the document is displayed.

According to the fourth aspect of the present disclosure, it is possible to reduce an area in which the image and the menu image are superimposed.

According to the fifth aspect of the present disclosure and the sixth aspect of the present disclosure, it is possible to reduce a moving distance of the cursor.

According to the seventh aspect of the present disclosure, it is possible to reduce the moving distance of the cursor, as compared with a case where a distance from the display position of the instruction image of the document displayed on the screen is not taken into consideration in a case where displaying the menu image.

According to the eighth aspect of the present disclosure, it is possible to improve the operability of the user, as compared with a case where a uniform display mode is used without considering an intention of the user.

According to the ninth aspect of the present disclosure, it is possible to improve the operability of the user, as compared with a case where an image predicted not to be needed by the user is displayed.

According to the tenth aspect of the present disclosure, it is possible to visually recognize the menu image and the document image superimposed on the menu image.

According to the eleventh aspect of the present disclosure, it is possible to obtain information displayed in an area which is superimposed on the menu image.

According to the twelfth aspect of the present disclosure, it is possible for the user to easily operate the menu image.

According to the thirteenth aspect of the present disclosure, it is possible to improve the operability of the user, as compared with a case where the uniform display mode is used without considering a size of the operation screen.

According to the fourteenth aspect of the present disclosure, it is possible to easily secure an area for displaying the menu image, as compared with a case where the operation screen is displayed in a uniform shape even though the operation screen is small.

According to the fifteenth aspect of the present disclosure, it is possible for the user to easily operate the menu image, as compared with a case where an area in which the menu image is displayed is not shifted.

According to the sixteenth aspect of the present disclosure, it is possible to reduce a time and effort for the user to search for the menu image, as compared with a case where the display position of the menu image is changed depending on a change of the page.

According to the seventeenth aspect of the present disclosure, it is possible to improve the operability of the user in a case where the page is changed, as compared with a case where the display position of the menu image is changed depending on the change of the page.

### BRIEF DESCRIPTION OF THE DRAWINGS

Exemplary embodiment(s) of the present invention will be described in detail based on the following figures, wherein:

Fig. 1 is a block diagram illustrating an example of a hardware configuration of an image display apparatus according to the present exemplary embodiment;
Fig. 2 is a diagram illustrating an example of displaying an operation screen;
Fig. 3 is a block diagram illustrating an example of a functional configuration of the image display apparatus;
Fig. 4 is a flowchart illustrating a processing procedure for displaying a menu image related to an enlarged thumbnail image;
Figs. 5A and 5B are diagrams illustrating another example of displaying the operation screen, Fig. 5A is a diagram illustrating a state before a document icon 410a is designated, and Fig. 5B is a diagram illustrating a state in which an enlarged thumbnail image 420a is displayed;
Figs. 6A and 6B are diagrams illustrating still another example of displaying the operation screen, Fig. 6A is a diagram illustrating a state in which the enlarged thumbnail image 420a is designated and a menu image 430 is transparently displayed, and Fig. 6B is a diagram illustrating a state in which the menu image 430 is designated and the menu image 430 is displayed;
Figs. 7A and 7B are diagrams illustrating an example of a display position on the operation screen, Fig. 7A is a diagram illustrating a state in which a display position of a document icon 410 is located above a display area 421 of the enlarged thumbnail image, and Fig. 7B is a diagram illustrating a state in which the display position of the document icon 410 is below the display area 421 of the enlarged thumbnail image;
Figs. 8A and 8B are diagrams illustrating another example of the display position on the operation screen, Fig. 8A is a diagram illustrating a state in which the display position of the document icon 410 is on a left side of the display area 421 of the enlarged thumbnail image, and Fig. 8B is a diagram illustrating a state in which the display position of the document icon 410 is on a right side of the display area 421 of the enlarged thumbnail image;
Figs. 9A and 9B are diagrams illustrating an example of a display position on the operation screen; and
Figs. 10A and 10B are diagrams illustrating an example of displaying a menu image.

### DETAILED DESCRIPTION OF THE INVENTION

Hereinafter, exemplary embodiments of the present invention will be described in detail with reference to drawings.

### <Hardware Configuration of Image Display Apparatus 1>

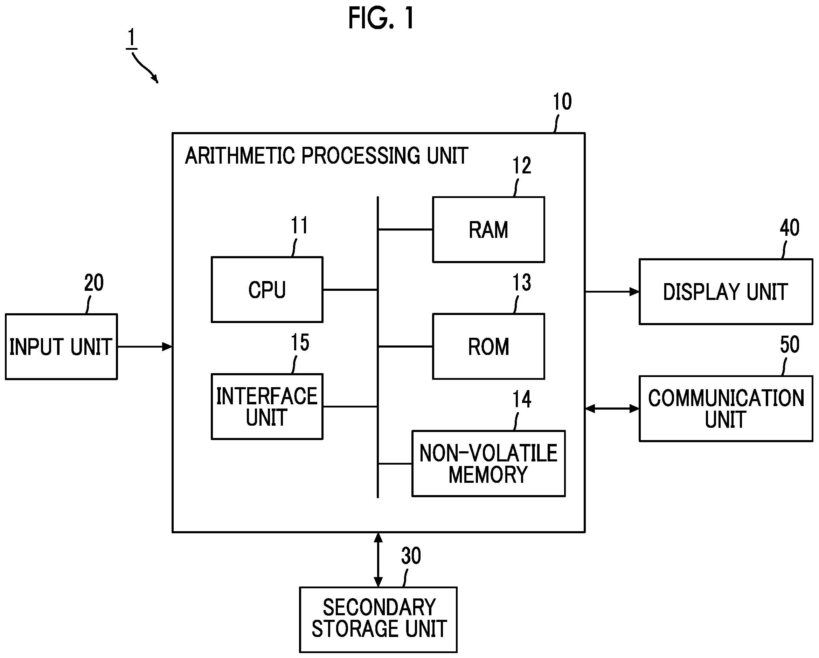

Fig. 1 is a block diagram illustrating an example of a hardware configuration of an image display apparatus 1 according to the present exemplary embodiment.

As illustrated in Fig. 1, the image display apparatus 1 according to the present exemplary embodiment functions as an example of an information processing apparatus, and includes an arithmetic processing unit 10 that executes a digital arithmetic process according to a predetermined processing program in a case of displaying a screen, an input unit 20 that accepts an input operation from a user, a secondary storage unit 30 that is realized by a hard disk drive (HDD), a display unit 40 that consists of a liquid crystal display panel, an organic electro luminescence (EL) display panel, or the like which displays an image, text information, or the like to the user, and a communication unit 50 which transmits and accepts data via a network.

The arithmetic processing unit 10 includes a central processing unit (CPU) 11 that controls the entire apparatus, as an example of a processor, a random access memory (RAM) 12 to be used as a working memory of the CPU 11, a read only memory (ROM) 13 that stores an image display processing program or the like executed by the CPU 11, a non-volatile memory 14 such as a static RAM (SRAM), a flash memory, or the like backed up by battery, that is rewritable and can hold data even in a case where power supply is interrupted, and an interface unit 15 that controls each unit such as the input unit 20 connected to the arithmetic processing unit 10. Image information such as thumbnail images (described below) displayed on the display unit 40 is stored in the non-volatile memory 14.

In addition to storing image data and the like, the secondary storage unit 30 also stores an image display processing program to be executed by the arithmetic processing unit 10, and the arithmetic processing unit 10 reads the image display processing program to execute each process of the image display apparatus 1 according to the present exemplary embodiment.

Here, the program executed by the CPU 11, as an example of a processor, is provided to the arithmetic processing unit 10 in a state of being stored in a computer-readable recording medium such as a magnetic recording medium (a magnetic tape, a magnetic disk, or the like), an optical recording medium (an optical disk, or the like), an optical magnetic recording medium, a semiconductor memory, or the like. Further, the program executed by the CPU 11 may be downloaded to the image display apparatus 1 by using a communication section such as the Internet.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

The input unit 20 is an apparatus such as a pointing device by which the user inputs an operation.

For example, in a case where the input unit 20 is a mouse or the like, the user can designate a position on a screen of the display unit 40, a displayed image, or the like by performing a cursor movement operation or a click operation.

Further, in a case where the input unit 20 is a touch panel or the like, the user can designate a position on a screen or a displayed image by performing an operation of touching the touch panel with a finger or the like or an operation of maintaining the touched state of the finger or the like for a longer time than a predetermined time. In this case, the input unit 20 is provided integrally with the display unit 40.

In addition to the apparatus such as the pointing device described above, a keyboard or the like for performing a key input operation may be provided as the input unit 20.

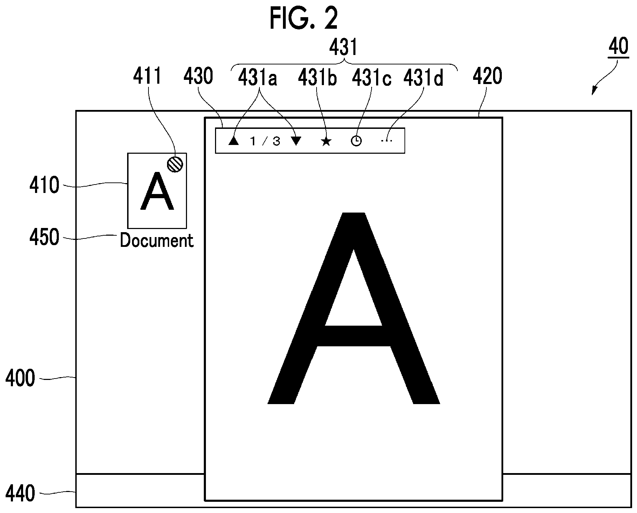

Fig. 2 is a diagram illustrating an example of an operation screen to which the present exemplary embodiment is applied.

The display unit 40 displays an operation screen 400, which is a screen for accepting an operation by the user, as illustrated in Fig. 2. In other words, the operation screen 400 is an area in which an instruction image and the like for accepting an instruction of the user on a document are arranged. The document may include an image in addition to a text, or may include only an image without including the text.

In addition to a document icon 410, the operation screen 400 displays an enlargement instruction image 411, an enlarged thumbnail image 420, a menu image 430, a toolbar 440, and the like. The document icon 410 is an example of an instruction image for accepting an instruction of the user on the document. Further, the enlargement instruction image 411 is an image for giving an instruction related to display of the enlarged thumbnail image 420. The enlarged thumbnail image 420 is a document image related to the document displayed by the instruction of the user with respect to the document icon 410. The menu image 430 is an image for accepting an operation of the user on the document image related to the document. The toolbar 440 is an aggregation of instruction units prepared to simplify operations on electronic documents by the user. Examples of the operation for this electronic document include operations of saving, printing, rotating, searching for, and encrypting the electronic document, an operation of bundling two or more electronic documents, and the like.

The document icon 410 represents various types of functions such as a program function with pictograms, and is an instruction image for accepting an instruction of the user on the document. The document icon 410 may be a thumbnail image for confirming at least a part of a content of the document. This thumbnail image is simply displayed as a reduced image of the original image, for example, in a case where the corresponding file is image data. In a case where the corresponding file is document data having a plurality of pages, a representative page such as the first page is displayed as the reduced image. The document icon 410 displayed as a thumbnail image functions as an icon for opening the corresponding file.

In a case where a document displayed as a thumbnail image consists of a plurality of pages, an image (not illustrated) for accepting a change of the display page from the user may be displayed in a state of being associated with the document icon 410.

In the present exemplary embodiment, the "page" is a set of pieces of data displayed as one surface on the operation screen 400 at a time.

The document icon 410 may be a tray used for the user to deliver an electronic document to a third party, a folder used for storing the electronic document, an electronic document, or the like represented by a pictogram.

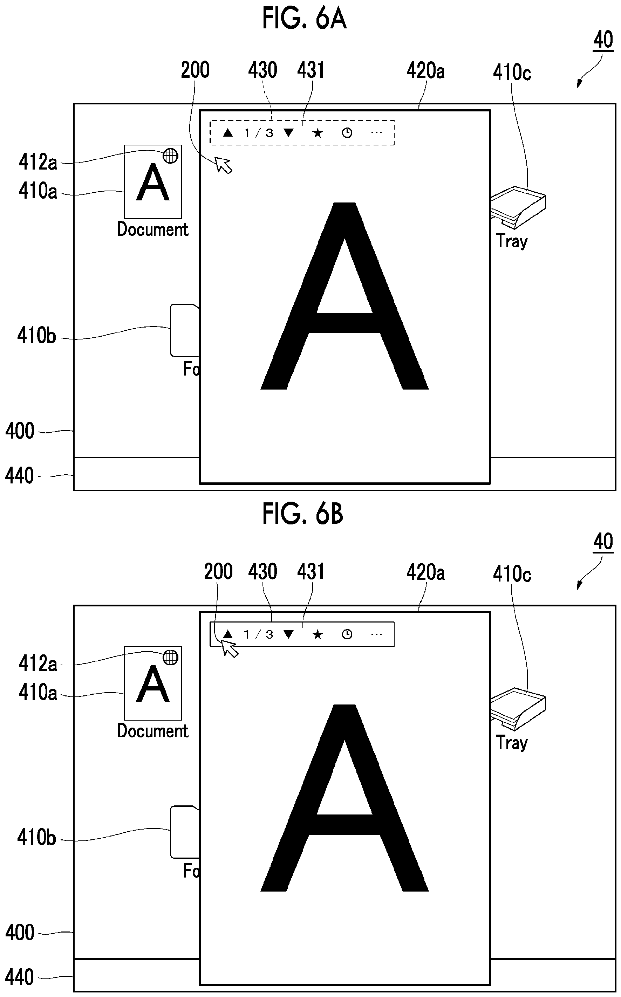

The enlargement instruction image 411 is an image for accepting an operation of the user and giving an instruction related to the display of the enlarged thumbnail image 420, and is displayed in a state of being associated with the document icon 410. Instead of the enlargement instruction image 411 illustrated in Fig. 2, a maintenance instruction image 412 (to be described below in Figs. 6A and 6B) corresponding to a content of the instruction may be displayed.

In the present exemplary embodiment, the enlargement instruction image 411 and the maintenance instruction image 412 are displayed so as to be superimposed on an upper right corner portion of the document icon 410. In this case, it is preferable that the enlargement instruction image 411 and the maintenance instruction image 412 are displayed so as not to reduce visibility of the document icon 410, for example. For example, the enlargement instruction image 411 is displayed to be smaller than the document icon 410. Further, the enlargement instruction image 411 is displayed semi-transparently so that a superimposed portion on the document icon 410 can be seen through.

The enlarged thumbnail image 420 is an example of the document image related to the document and an enlarged image of a thumbnail image related to the document icon 410, instructed to be enlarged by the user, and is displayed without starting a new program. Here, it is assumed that the enlarged thumbnail image 420 is enlarged and displayed in a size that allows the user to understand contents of the document corresponding to the document icon 410. The enlarged thumbnail image 420 is generally displayed larger than the corresponding document icon 410. Further, a resolution of the enlarged thumbnail image 420 may be higher than a resolution of a thumbnail image displayed as the document icon 410.

The menu image 430 is an image for accepting an operation of the user on the document or a document image related to the document, and is displayed at a position determined by a display position of the document icon 410, instructed by the user on the operation screen 400. This determined position is a position that does not interfere with the display of a document image such as the enlarged thumbnail image 420. The menu image 430 is displayed at a position close to the document icon 410 instructed by the user, which is an end area of an area for displaying the enlarged thumbnail image 420, for example. In a case where the display position of the document icon 410 instructed by the user is located above the operation screen 400, the upper end area of the area for displaying the enlarged thumbnail image 420 is closer to the display position of the document icon 410 instructed by the user, than a lower end area of the area. Further, in a case where the display position of the document icon 410 instructed by the user is on the left side of the area for displaying the enlarged thumbnail image 420, an end area on the left side of the area for displaying the enlarged thumbnail image 420 is closer to the display position of the document icon 410 instructed by the user, than an end area on the right side of the area.

In addition to the number of pages of the document, the menu image 430 displays button images 431 related to various types of menus. Examples of the button image 431 include a change button image 431a, which is a button image for accepting a change in a display page, and an edit button image 431b, which is a button image for accepting execution of editing a document, for example. The editing of the document includes inputting a text, adding a sticky note image or a stamp image, and the like. Further, for example, there are a history button image 431c which is a button image for accepting display of an editing history of the document, and an omission button image 431d which is a button image for accepting display of a screen related to a process in which the display as various button images is omitted. In addition to these, a button for accepting other operations (not illustrated) may be displayed. An example of the other operation is transmitting the document to another user or the like.

In addition, as illustrated in Fig. 2, a text 450 such as a name of a file or a function corresponding to the document icon 410 may be displayed in association with each image, on the operation screen 400. Further, the text 450 may be displayed in association with the enlarged thumbnail image 420.

### <Functional Configuration of Image Display Apparatus 1>

Next, a functional configuration of the image display apparatus 1 will be described.

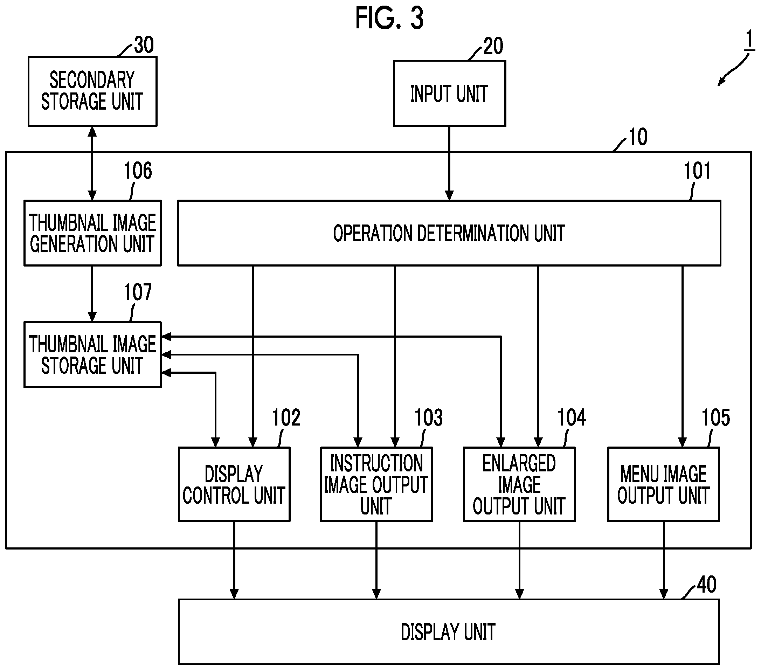

Fig. 3 is a block diagram illustrating an example of the functional configuration of the image display apparatus 1. As illustrated in Fig. 3, the image display apparatus 1 includes an operation determination unit 101, a display control unit 102, an instruction image output unit 103, an enlarged image output unit 104, a menu image output unit 105, a thumbnail image generation unit 106, and a thumbnail image storage unit 107, which are realized by the arithmetic processing unit 10 (see Fig. 1).

The operation determination unit 101 determines whether or not a user operation is performed via the input unit 20 on the operation screen 400 (see Fig. 2). The user operation is, for example, an operation of designating an image, various icons, a position, or the like on the operation screen 400, a scroll operation, a key input operation, or the like.

The display control unit 102 controls a display mode or a position of the document icon 410, the enlarged thumbnail image 420, the menu image 430, the toolbar 440 (see Fig. 2), and the like based on a content determined by the operation determination unit 101. Further, a thumbnail image is received from the thumbnail image storage unit 107, which will be described below, and controlled to be displayed as the document icon 410 for opening the corresponding file.

The instruction image output unit 103 outputs an instruction image such as the enlargement instruction image 411 for assisting the operation of the user to the display unit 40 in a case of an enlargement instruction from the user or an instruction to maintain the enlargement. This instruction image is displayed in a state of being associated with the document icon 410.

The enlarged image output unit 104 brings out the thumbnail image from the thumbnail image storage unit 107, based on determination that the enlargement instruction image 411 is designated, by the operation determination unit 101. The enlarged image output unit 104 outputs the enlarged thumbnail image 420, which is enlarged from a thumbnail image corresponding to the document icon 410 instructed by the user, to the display unit 40 without starting a new program.

The menu image output unit 105 outputs the menu image 430 to the display unit 40, based on determination that the enlarged thumbnail image 420 is designated, by the operation determination unit 101. The menu image 430 is displayed at a position determined by the display position of the document icon 410 instructed by the user. Preferably, in order to secure the area for displaying the enlarged thumbnail image 420, the menu image 430 is displayed in the area for displaying the enlarged thumbnail image 420, for example. More preferably, in the area for displaying the enlarged thumbnail image 420, the menu image 430 is displayed at a position close to the document icon 410 instructed by the user, for example. In the area for displaying the enlarged thumbnail image 420, the position close to the document icon 410 instructed by the user is a position is closer to the document icon 410 than a distance between a center of the area for displaying the enlarged thumbnail image 420 and the document icon 410.

The thumbnail image generation unit 106 generates a thumbnail image to be displayed on the operation screen 400, based on a file such as image data stored in the secondary storage unit 30.

The thumbnail image storage unit 107 acquires and stores the thumbnail image generated by the thumbnail image generation unit 106. The thumbnail image storage unit 107 is realized by the non-volatile memory 14.

### <Display of Menu Image by Mouse Operation>

Next, a user operation and a display process in a case where the menu image 430 is displayed will be described with reference to Figs. 3 to 8B. Here, a case where the user uses the input unit 20 such as a mouse is taken as an example.

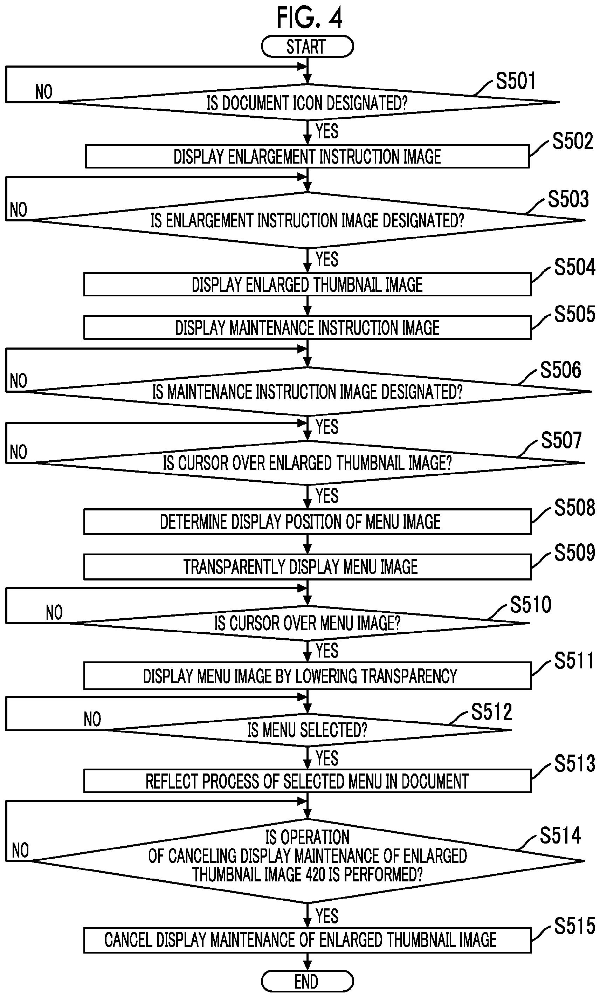

Fig. 4 is a flowchart illustrating a processing procedure for displaying the menu image 430.

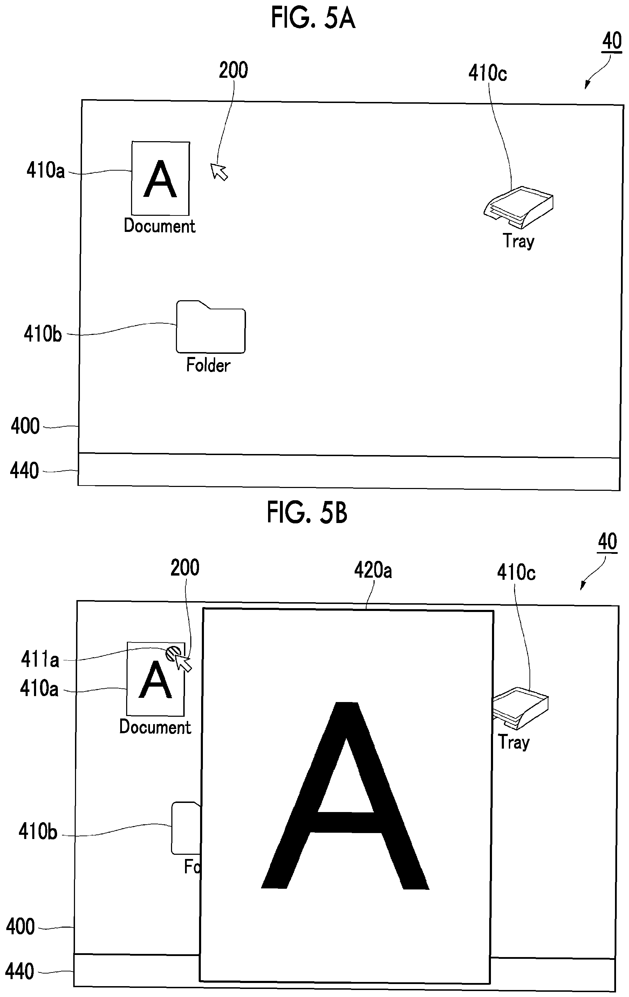

Figs. 5A to 6B are diagrams illustrating an example of displaying the operation screen 400. Fig. 5A illustrates a state before the document icon 410a is designated, and Fig. 5B illustrates a state in which the enlarged thumbnail image 420a is displayed. Fig. 6A illustrates a state in which the enlarged thumbnail image 420a is designated and the menu image 430 is transparently displayed, and Fig. 6B illustrates a state in which the menu image 430 is designated and the menu image 430 is displayed.

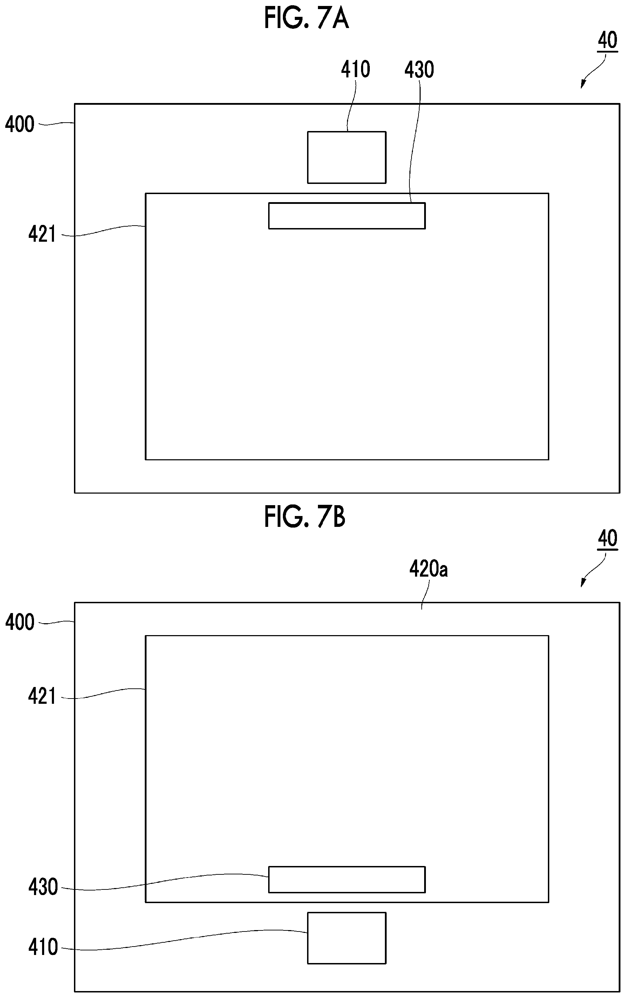

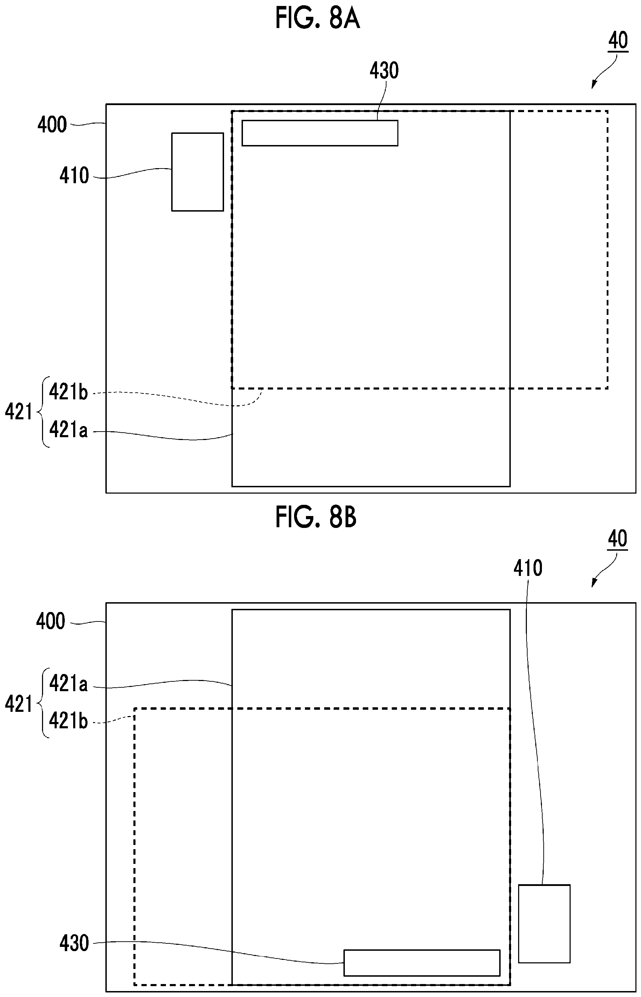

Figs. 7A to 8B are diagrams illustrating an example of a display position on the operation screen 400. Fig. 7A illustrates a state in which a display position of a document icon 410 is located above a display area 421 of the enlarged thumbnail image, and Fig. 7B illustrates a state in which the display position of the document icon 410 is below the display area 421 of the enlarged thumbnail image. Fig. 8A illustrates a state in which the display position of the document icon 410 is on a left side of the display area 421 of the enlarged thumbnail image, and Fig. 8B illustrates a state in which the display position of the document icon 410 is on a right side of the display area 421 of the enlarged thumbnail image.

As illustrated in Figs. 5A to 6B, the display unit 40 according to the present exemplary embodiment displays a cursor 200 which indicates a position on the screen, an image, or the like, on the operation screen 400. The cursor 200 is moved by an operation of the user input via the input unit 20, and is displayed so as to point to the position, the image, or the like on the screen designated by the user.

The document icons 410 (410a, 410b, and 410c) and the toolbar 440 are displayed on the operation screen 400.

The enlargement instruction image 411a illustrated in Fig. 5B is an image for accepting an instruction of the user who displays the enlarged thumbnail image 420a.

The maintenance instruction image 412a illustrated in Figs. 6A and 6B is an image for accepting an instruction of the user who maintains the display of the enlarged thumbnail image 420a. In a case where the enlargement instruction image 411a is designated and the enlarged thumbnail image 420a is displayed, the maintenance instruction image 412a is displayed at a position at which the enlargement instruction image 411a is displayed, for example.

In the menu image 430 illustrated in Figs. 6A and 6B, the display of the menu image 430 changes depending on a position of the cursor 200 operated by the user.

As illustrated in Figs. 7A to 8B, the menu image 430 is displayed at a position determined by the display position of the document icon 410 designated by the user, on the operation screen 400.

The display areas 421 (421a and 421b) illustrated in Figs. 8A and 8B are areas for displaying the enlarged thumbnail image 420, and are distinguished by a direction of the document image such as the enlarged thumbnail image 420. For example, in the display area 421a, the vertically long enlarged thumbnail image 420 having a length in an up-down direction longer than a length in a right-left direction is displayed, and in the display area 421b, the horizontally long enlarged thumbnail image 420 having a length in the horizontal direction longer than a length in the vertical direction is displayed. The display area 421 is an area of the operation screen 400, and is provided in an area that is not superimposed on at least a part of the designated document icon 410.

Next, the description is continued with reference to the flowchart illustrated in Fig. 4.

First, the operation determination unit 101 illustrated in Fig. 3 determines whether or not any of the document icons 410 is designated based on an operation via the input unit 20 (step S501). In the present exemplary embodiment, the operation determination unit 101 determines the operation of moving the cursor 200 so as to indicate any of the document icons 410, as designation of the document icon 410. For example, a mouse over operation or the like of locating the cursor 200 over the document icon 410 is determined as the designation of the document icon 410. In the example in Fig. 5A, since the cursor 200 is not located over any of the document icons 410, it is determined that the document icon 410 is not designated.

In a case where the document icon 410 is not designated in step S501 (NO in step S501), the process waits until the document icon is designated. In a case where the document icon 410 is designated (YES in step S501), the instruction image output unit 103 outputs and displays the enlargement instruction image 411 (step S502). For example, in a case where a mouse over operation of locating the cursor 200 over the document icon 410a illustrated in Fig. 5A is performed, the enlargement instruction image 411a is displayed as illustrated in Fig. 5B.

Next, the operation determination unit 101 determines whether or not the enlargement instruction image 411 is designated based on an operation via the input unit 20 (step S503). The operation determination unit 101 according to the present exemplary embodiment determines, for example, that a mouse over operation on the enlargement instruction image 411 is designation on the enlargement instruction image 411.

In a case where the enlargement instruction image 411a is not designated in step S503 (NO in step S503), the process waits until the enlargement instruction image 411a is designated. In a case where the enlargement instruction image 411 is designated (YES in step S503), the enlarged image output unit 104 brings out a thumbnail image from the thumbnail image storage unit 107, and outputs and displays the enlarged thumbnail image 420 enlarged from the thumbnail image corresponding to the designated document icon 410 to the display unit 40 (step S504). In the example in Fig. 5B, the enlargement instruction image 411a on the document icon 410a is designated by a mouse over operation of the cursor 200, and the enlarged thumbnail image 420a enlarged from the thumbnail image corresponding to the document icon 410a is displayed.

The instruction image output unit 103 outputs and displays the maintenance instruction image 412 to the display unit 40 (step S505). The maintenance instruction image 412 accepts that the display of the enlarged thumbnail image 420 is maintained. For example, in a case where the enlargement instruction image 411a illustrated in Fig. 5B is designated and the enlarged thumbnail image 420a is displayed, the enlargement instruction image 411a is changed to the maintenance instruction image 412a illustrated in Fig. 6A and displayed.

Subsequently, the operation determination unit 101 determines whether or not the maintenance instruction image 412 is designated (step S506). In the present exemplary embodiment, the operation determination unit 101 determines, for example, a click operation on the maintenance instruction image 412 as designation on the maintenance instruction image 412. In the example illustrated in Fig. 6A, after the maintenance instruction image 412a is designated by the click operation, the display of the enlarged thumbnail image 420a is maintained.

In a case where the maintenance instruction image 412 is not designated in this step S506 (NO in step S506), the process waits until the maintenance instruction image 412 is designated. In a case where the maintenance instruction image 412 is designated (YES in step S506), the operation determination unit 101 determines whether or not the cursor 200 is over the enlarged thumbnail image 420 of which display is maintained (step S507).

In a case where the cursor 200 is not over the enlarged thumbnail image 420 in step S507 (NO in step S507), the process waits until the cursor 200 moves to the enlarged thumbnail image 420, and the menu image 430 is not displayed. In a case where the cursor 200 does not exist over the enlarged thumbnail image 420, it is predicted that the user does not need the menu image 430.

In step S507, in a case where the cursor 200 is over the enlarged thumbnail image 420 (YES in step S507), the display control unit 102 determines a display position of the menu image 430 according to a display position of the designated document icon 410 (step S508). The display position of the menu image 430 is determined at a position close to the designated document icon 410. As this distance, a distance between a center point of the designated document icon 410 and a center point of the menu image 430, a distance between a predetermined point of the designated document icon 410 and a predetermined point of the menu image 430, a distance of the closest point between the designated document icon 410 and the menu image 430, and the like may be used.

Here, a specific example of the display position of the menu image 430 determined by the display position of the document icon 410 will be given.

In the example in Fig. 7A, since the display position of the document icon 410 is located above the operation screen 400 and on an upper side of the display area 421 for displaying the enlarged thumbnail image 420, the display position of the menu image 430 is on an upper side in the display area 421. In the example in Fig. 7B, since the display position of the document icon 410 is lower than the display area 421, the display position of the menu image 430 is on a lower side in the display area 421.

In the example in Fig. 8A, since the display position of the document icon 410 is located above the operation screen 400 and on a left side of the display areas 421a and 421b, the display position of the menu image 430 is on an upper side and a left side in the display areas 421a and 421b. In the example in Fig. 8B, since the display position of the document icon 410 is below the operation screen 400 and on a right side of the display areas 421a and 421b, the display position of the menu image 430 is on a lower side and a right side in the display areas 421a and 421b.

Next, the menu image output unit 105 outputs and transparently displays the menu image 430 to the display unit 40 at a position determined by the display position of the designated document icon 410 (step S509). In the example in Fig. 6A, although the cursor 200 is over the enlarged thumbnail image 420a, the cursor 200 does not exist at a position of an area for displaying the menu image 430. Therefore, the menu image 430 is made semi-transparent by increasing a transparency, and a superimposed portion on the enlarged thumbnail image 420a is displayed so as to be seen through.

The operation determination unit 101 determines whether or not the cursor 200 is over the menu image 430 (step S510) . In a case where the cursor 200 is not over the menu image 430 (NO in step S510), the process waits until the cursor 200 moves over the menu image 430. In a case where the cursor 200 is over the menu image 430 (YES in step S510) , the menu image output unit 105 outputs the menu image 430 to the display unit 40, and the transparency is lowered and displayed as compared with a case where the cursor 200 is not over the menu image 430 (step S511). The menu image may be displayed without being transparent. In the example in Fig. 6B, since the cursor 200 is over the menu image 430, the transparency of the menu image 430 is lowered so that the button image 431 related to the menu is displayed more clearly.

The operation determination unit 101 determines whether or not the button image 431 related to one menu is selected, among the button images 431 related to menus included in the menu image 430 (step S512). In a case where the button image 431 related to one menu is not selected (NO in step S512), the process waits until the button image 431 related to one menu is selected. In a case where the button image 431 related to one menu is selected (YES in step S512), the display control unit 102 performs control so that the enlarged thumbnail image 420 obtained by reflecting a process of the menu corresponding to the selected button image 431 in the document is displayed (step S513). Here, even in a case where the page in which the process of the selected menu is reflected and which is displayed is changed, the display position or a size of the menu image 430 is not changed.

Next, the operation determination unit 101 determines whether or not an operation of canceling the maintenance of the display of the enlarged thumbnail image 420 is performed (step S514). The operation determination unit 101 according to the present exemplary embodiment determines, for example, performing a click operation at a position other than the display area 421 or a click operation again on the maintenance instruction image 412, as an operation of canceling the maintenance of the display of the enlarged thumbnail image 420. In a case where the canceling operation is not performed in step S514 (NO in step S514), the display of the enlarged thumbnail image 420 is continued to be maintained. In a case where the canceling operation is performed (YES in step S514), the display control unit 102 cancels the maintenance of the display of the enlarged thumbnail image 420 (step S515). In a case where the canceling operation is performed, the menu image 430 is not displayed since the cursor 200 is located at a position other than the display area 421 for displaying the enlarged thumbnail image 420 as illustrated in Fig. 5B.

The process of displaying the menu image 430 is completed according to the above processing procedure.

In the above example, the display position of the menu image 430 is determined after the enlarged thumbnail image 420 is displayed, and the exemplary embodiment is not limited thereto. In a case where any of the document icons 410 is designated, the display position of the menu image 430 may be determined by a distance from the designated document icon 410 without waiting for the display of the enlarged thumbnail image 420.

Further, although the enlarged thumbnail image 420 is displayed and the display of the enlarged thumbnail image 420 is maintained by the operation of designating the enlargement instruction image 411 or the maintenance instruction image 412, the enlarged thumbnail image 420 may be displayed and the display of the enlarged thumbnail image 420 may be maintained by a predetermined operation so that the cursor 200 is located over the document icon 410 without displaying the enlargement instruction image 411 or the maintenance instruction image 412. Further, the operation for displaying the enlarged thumbnail image 420 and maintaining the display of the enlarged thumbnail image 420 may be performed by a predetermined operation such as a key operation, for example.

In a case where the display of the enlarged thumbnail image 420 is maintained, the maintenance instruction image 412 may be not displayed, or the enlargement instruction image 411 and the maintenance instruction image 412 may be independently displayed at positions different from each other. With the present exemplary embodiment, by changing and displaying the enlargement instruction image 411 to the maintenance instruction image 412, it is not necessary to move the cursor, for an operation of the user from displaying the enlarged thumbnail image 420 to maintaining the display of the enlarged thumbnail image 420.

Further, the enlarged thumbnail image 420 or the menu image 430 is displayed in a state in which the cursor 200 is located over the document icon 410 based on the operation of the input unit 20 such as a mouse of the user, and the exemplary embodiment is not limited thereto. In a case of a touch panel or the like, the input unit 20 is provided integrally with the display unit 40. In this aspect, the user may perform an operation of touching the display position of the document icon 410 or the like on the display unit 40 which is a touch panel with a finger or the like, or an operation of maintaining the contact state of the finger or the like for a longer time than a predetermined time so as to display the enlarged thumbnail image 420 or the menu image 430.

### <Display Position of Enlarged Thumbnail Image and Menu Image>

In the above example, the enlarged thumbnail image 420 is displayed by using the entire area of the display area 421, and the exemplary embodiment is not limited thereto. The enlarged thumbnail image 420 may not be displayed by using the entire area of the display area 421.

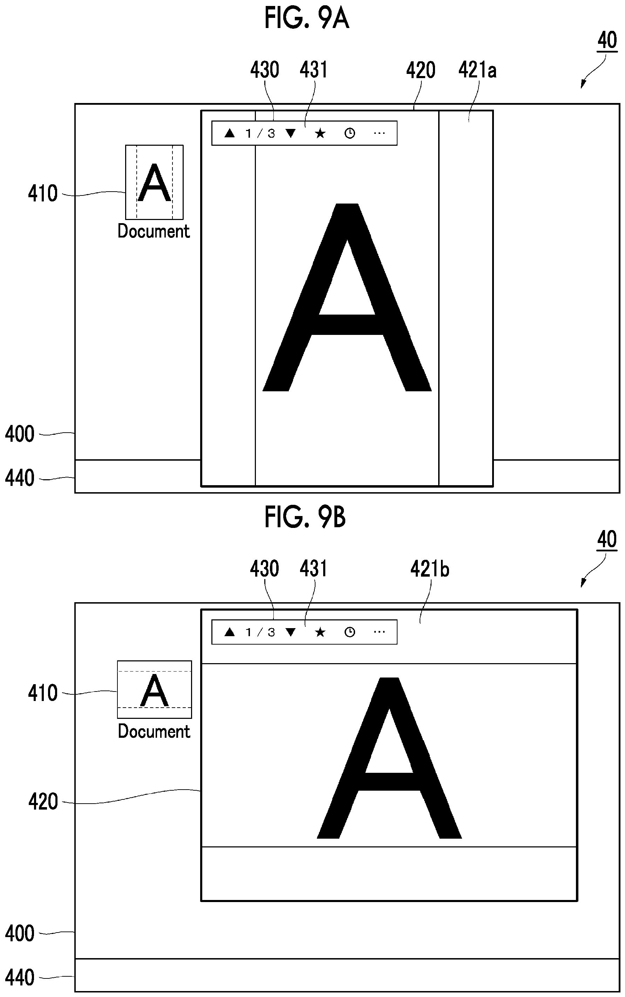

An example in which the menu image 430 is displayed so that at least a part of the area of the menu image 430 is not superimposed on the enlarged thumbnail image 420 will be described with reference to Fig. 9.

Figs. 9A and 9B are diagrams illustrating an example of a display position on an operation screen.

For convenience, in the document icon 410 illustrated in Figs. 9A and 9B, an area for displaying a thumbnail image is represented by a solid line, and a shape of the displayed thumbnail image is represented by a dotted line.

As illustrated in Fig. 9A, in a case where a width of the enlarged thumbnail image 420 in a right-left direction is narrower than a width of the display area 421 in the left-right direction, the display control unit 102 displays the enlarged thumbnail image 420 at a center portion in the display area 421 in the right-left direction, and displays the menu image 430 in an end area of the display area 421.

As illustrated in Fig. 9B, in a case where a width of the enlarged thumbnail image 420 in an up-down direction is narrower than a width of the display area 421 in the up-down direction, the display control unit 102 displays the enlarged thumbnail image 420 at a center portion in the display area 421 in the up-down direction, and displays the menu image 430 in the end area of the display area 421.

Further, in a case where a document corresponding to the document icon 410 has a plurality of pages, the display position or the size of the menu image 430 is not changed even in a case where a size or a direction of the enlarged thumbnail image 420 is changed with a change of the page to be displayed on the enlarged thumbnail image 420.

In the above example, the enlarged thumbnail image 420 is displayed at the center portion of the display area 421 in the right-left direction or the up-down direction, and the enlarged thumbnail image 420 may be displayed in the center portion of the display area 421, and the menu image 430 may be displayed in the end area of the display area 421. As a result, the area superimposed on the enlarged thumbnail image 420 and the menu image 430 can be reduced while handling the enlarged thumbnail image 420 having various shapes.

### <Menu Image Display based on Size of Operation Screen>

Further, in the example described above, the menu image 430 is displayed in a uniform shape based on the user operation, and the display mode of the menu image 430 may be based on a size of the operation screen 400.

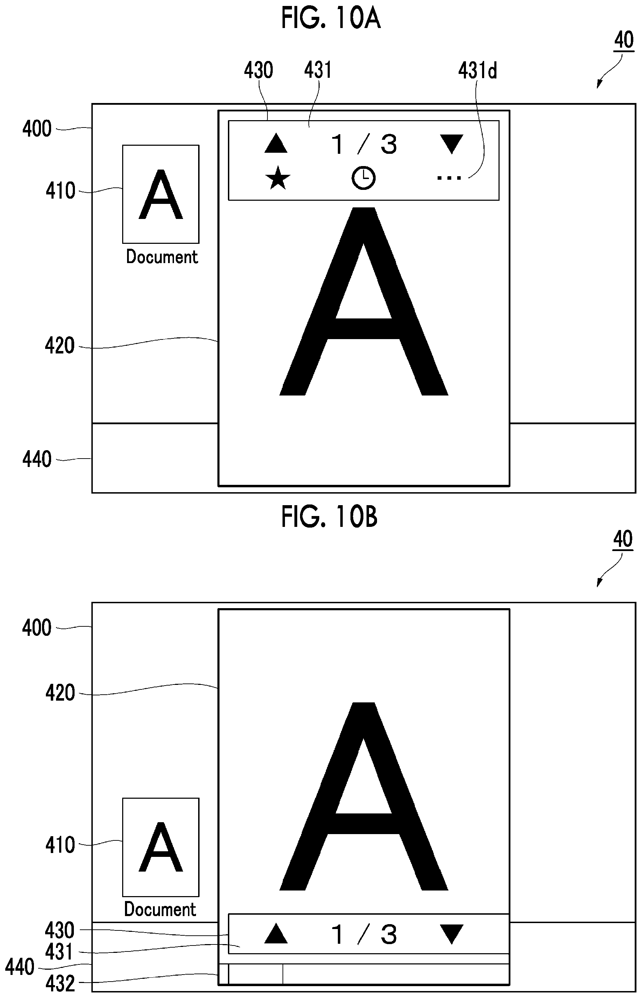

As an example, a case where the size of the operation screen 400 is smaller than a predetermined value will be described with reference to Figs. 2 and, 10A and 10B.

Figs. 10A and 10B are diagrams illustrating an example of displaying the menu image 430.

As illustrated in Fig. 2, in a case where the size of the operation screen 400 is equal to or larger than a predetermined value, the button image 431 related to a menu is displayed in one stage in the menu image 430. The entire area of the menu image 430 is displayed at once on the operation screen 400. A size of the button image 431 related to the menu is a size that is easy for the user to operate. Here, the predetermined value is the minimum value of the size of the operation screen 400 on which the entire area of the menu image 430 having the button image 431 related to the menu having a size that is easy for the user to operate at one time is displayed. Further, the predetermined value may be the minimum value of the size of the operation screen 400 so that the menu image 430 does not interfere with the display of a document image such as the enlarged thumbnail image 420 in the display area 421 of which size is changed with the size of the operation screen 400.

On the other hand, in a case where the size of the operation screen 400 is smaller than the predetermined value, in the example in Fig. 10A, the size of the button image 431 related to the menu is not changed, and the menu image 430 is displayed in the display area 421 in a two-stage display mode. The button image 431 related to the menu is displayed in two stages, and the number of stages is not limited to this. Meanwhile, in a case where the display mode has three or more stages, an area in which the enlarged thumbnail image 420 can be visually recognized may be small in a case where the menu image 430 is designated, and the menu image 430 in two stages is adopted here.

Further, in the example in Fig. 10B, in a case where the size of the operation screen 400 is smaller than the predetermined value, a partial area of the menu image 430 is displayed in the display area 421 without changing a shape of the menu image 430. In this exemplary embodiment, the scroll image 432 that accepts the operation of shifting the display area of the menu image 430 from the user is displayed, and the present exemplary embodiment is not limited to this configuration. The operation of shifting the display area of the menu image 430 may be accepted from the user without displaying the scroll image 432. For example, the operation of shifting the display area of the menu image 430 includes a scroll operation via an input unit 20 such as a mouse or an operation of sliding the display unit 40 such as a touch panel with a finger or the like in contact with the display unit 40. Further, the scroll image 432 may be temporarily displayed as an auxiliary image indicating which area of the menu image 430 is displayed.

In the above example, in a case where the size of the operation screen 400 is smaller than the predetermined value, the number of button images 431 related to the displayed menu is not changed, and the number of button images 431 to be displayed may be reduced. The process in which the display as the button image 431 is omitted is displayed on a screen corresponding to the omission button image 431d.

Further, the size of the button image 431 related to the menu may be reduced and displayed in one stage. The size of the button image 431 related to the reduced menu is set to such a size that the user can visually select each of the button images 431.

Further, although the button images 431 related to the menu are arranged in the right-left direction, the menu image 430 may be displayed by arranging the button images 431 in the up-down direction. In a case where the enlarged thumbnail image 420 is displayed as illustrated in Fig. 9A, an area in which the enlarged thumbnail image 420 and the menu image 430 are superimposed can be reduced as compared with the multi-stage arranged in the right-left direction in a case where the button images 431 related to the menu are arranged in the up-down direction.

In the above example, the display of the menu image 430 is changed in a case where the size of the operation screen 400 is smaller than the predetermined value, and the display of the menu image 430 may be also changed in a case where the size of the operation screen 400 is larger than the predetermined value. As illustrated in Fig. 2, in a case where the size of the menu image 430 with respect to the size of the display area 421 is smaller than a predetermined value, the process displayed on the screen corresponding to the omission button image 431d is additionally displayed as the button image 431, for example. As a result, an operation of selecting the omission button image 431d and then selecting the process again on the screen is omitted.

The process performed by the image display apparatus 1 according to the present exemplary embodiment is prepared, for example, as a program such as application software. The program can be provided by a communication section as well as provided by being stored in a recording medium such as a CD-ROM or the like.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims.

### Brief Description of the Reference Symbols

1: image display apparatus
10: arithmetic processing unit
11: CPU
20: input unit
30: secondary storage unit
40: display unit
50: communication unit
101: operation determination unit
102: display control unit
104: enlarged image output unit
105: menu image output unit
400: operation screen
410: document icon
420: enlarged thumbnail image
430: menu image

## Claims

1. An information processing apparatus (1) comprising:
a processor (11) configured to:
display an instruction image (411) for accepting an instruction of a user on a document (410) on an operation screen (400) for accepting an operation by the user;
display a document image (420) related to the document according to the operation of the user on a display position of the instruction image, wherein the document includes an image in addition to a text, or includes only the image without including the text;
display a menu image (430) for accepting the operation of the user on the document image at a position determined by the display position of the instruction image on the operation screen (400) ; and
display the menu image in an area for displaying the document image,
the information processing apparatus (1) being **characterized in that** the processor (11) is further configured to:
in a case where the display position of the instruction image is located above the area for displaying the document image, display the menu image on an upper side in the area for displaying the document image;
in a case where the display position of the instruction image is below the area for displaying the document image, display the menu image on a lower side in the area the document image is displayed;
in a case where the display position of the instruction image is on the left of the area for displaying the document image, display the menu image on a left side in the area for displaying the document image; and
in a case where the display position of the instruction image is on the right of the area for displaying the document image, display the menu image on a right side in the area the document image is displayed.

2. The information processing apparatus (1) according to claim 1, wherein the processor (11) is configured to:
in a case where a cursor is located over the instruction image, start displaying the document image.

3. The information processing apparatus (1) according to claim 1, wherein the processor (11) is configured to:
display the document image at a center portion in the area for displaying the document image, and display the menu image in an end area of the area for displaying the document image.

4. The information processing apparatus (1) according to any one of claims 1 to 3, wherein the processor (11) is configured to:
display the menu image at a position close to the instruction image.

5. The information processing apparatus (1) according to claim 1 or 2, wherein the processor (11) is configured to:
change the display of the menu image based on a position of a cursor operated by the user.

6. The information processing apparatus (1) according to claim 5, wherein the processor (11) is configured to:
display the menu image in the area for displaying the document image; and
in a case where the position of the cursor is not in the area for displaying the document image, not display the menu image.

7. The information processing apparatus (1) according to claim 5, wherein the processor (11) is configured to:
display the menu image in the area for displaying the document image; and
change a transparency of the menu image based on whether or not the position of the cursor is over the menu image.

8. The information processing apparatus (1) according to claim 7, wherein the processor (11) is configured to:
in a case where the position of the cursor is not over the menu image, transparently display the menu image.

9. The information processing apparatus (1) according to claim 7, wherein the processor (11) is configured to:
in a case where the position of the cursor is over the menu image, display the menu image by lowering a transparency than the transparency of the menu image in a case where the position of the cursor is not over the menu image.

10. The information processing apparatus (1) according to claim 1 or 2, wherein the processor (11) is configured to:
change the display of the menu image based on a size of the operation screen (400).

11. The information processing apparatus (1) according to claim 10, wherein the processor (11) is configured to:
in a case where the operation screen (400) is smaller than a predetermined value, change a shape of the menu image and display the menu image.

12. The information processing apparatus (1) according to claim 10, wherein the processor (11) is configured to:
in a case where the operation screen (400) is smaller than a predetermined value and a partial area of the menu image is displayed, shift the area to be displayed of the menu image.

13. The information processing apparatus (1) according to claim 1 or 2, wherein the processor (11) is configured to:
in a case where the document has a plurality of pages, not change the display position of the menu image even in a case where the page to be displayed in the document image is changed.

14. The information processing apparatus (1) according to claim 13, wherein the processor (11) is configured to:
display a change button image that is an image to be displayed in an area of the menu image and accepts an operation of changing the page to be displayed in the document image from the user.

15. A program causing a computer to realize:
a function of displaying an instruction image for accepting an instruction of a user on a document on an operation screen (400) for accepting an operation by the user;
a function of displaying a document image related to the document according to the operation of the user on a display position of the instruction image, wherein the document includes an image in addition to a text, or includes only the image without including the text; and
a function of displaying a menu image for accepting the operation of the user on the document image at a position determined by the display position of the instruction image on the operation screen (400) ; the program being **characterized in** further causing the computer to realize:
a function of displaying the menu image in an area for displaying the document image,
wherein the function of displaying the menu image in the area for displaying the document image comprises:
in a case where the display position of the instruction image is located above the area for displaying the document image, displaying the menu image on an upper side in the area for displaying the document image;
in a case where the display position of the instruction image is below the area for displaying the document image, displaying the menu image on a lower side in the area the document image is displayed;
in a case where the display position of the instruction image is on the left of the area for displaying the document image, displaying the menu image on a left side in the area for displaying the document image; and
in a case where the display position of the instruction image is on the right of the area for displaying the document image, displaying the menu image on a right side in the area the document image is displayed.

16. An information processing method comprising:
displaying an instruction image for accepting an instruction of a user on a document on an operation screen (400) for accepting an operation by the user;
displaying a document image related to the document according to the operation of the user on a display position of the instruction image, wherein the document includes an image in addition to a text, or includes only the image without including the text;
displaying a menu image for accepting the operation of the user on the document image at a position determined by the display position of the instruction image on the operation screen (400) ; and
displaying the menu image in an area for displaying the document image
the method being **characterized in that**
the step of displaying the menu image in the area for displaying the document image comprises:
in a case where the display position of the instruction image is located above the area for displaying the document image, displaying the menu image on an upper side in the area for displaying the document image;
in a case where the display position of the instruction image is below the area for displaying the document image, displaying the menu image on a lower side in the area the document image is displayed;
in a case where the display position of the instruction image is on the left of the area for displaying the document image, displaying the menu image on a left side in the area for displaying the document image; and
in a case where the display position of the instruction image is on the right of the area for displaying the document image, displaying the menu image on a right side in the area the document image is displayed.

## Patentansprüche

1. Informationsverarbeitungsvorrichtung (1), umfassend: einen Prozessor (11), der konfiguriert ist:
ein Anweisungsbild (411) zum Annehmen einer Anweisung eines Benutzers in Bezug auf ein Dokument (410) auf einem Bedienungsbildschirm (400) zum Annehmen einer Bedienung durch den Benutzer anzuzeigen;
ein Dokumentenbild (420), das sich auf das Dokument bezieht, gemäß der Bedienung des Benutzers an einer Anzeigeposition des Anweisungsbildes anzuzeigen, wobei das Dokument ein Bild zusätzlich zu einem Text enthält oder nur das Bild enthält, ohne den Text zu enthalten;
ein Menübild (430) zum Annehmen der Bedienung des Benutzers an dem Dokumentenbild an einer Position, die durch die Anzeigeposition des Anweisungsbildes auf dem Bedienungsbildschirm (400) bestimmt ist, anzuzeigen; und
das Menübild in einem Bereich zum Anzeigen des Dokumentenbildes anzuzeigen,
wobei die Informationsverarbeitungsvorrichtung (1) **dadurch gekennzeichnet ist, dass** der Prozessor (11) ferner konfiguriert ist:
in einem Fall, in dem sich die Anzeigeposition des Anweisungsbildes oberhalb des Bereichs zum Anzeigen des Dokumentenbildes befindet, das Menübild auf einer Oberseite in dem Bereich zum Anzeigen des Dokumentenbildes anzuzeigen;
in einem Fall, in dem sich die Anzeigeposition des Anweisungsbildes unterhalb des Bereichs zum Anzeigen des Dokumentenbildes befindet, das Menübild auf einer Unterseite in dem Bereich, in dem das Dokumentenbild angezeigt wird, anzuzeigen;
in einem Fall, in dem sich die Anzeigeposition des Anweisungsbildes links von dem Bereich zum Anzeigen des Dokumentbildes befindet, das Menübild auf einer linken Seite in dem Bereich zum Anzeigen des Dokumentbildes anzuzeigen; und
in einem Fall, in dem die Anzeigeposition des Anweisungsbildes sich rechts von dem Bereich zum Anzeigen des Dokumentenbildes befindet, das Menübild auf einer rechten Seite in dem Bereich, in dem das Dokumentenbild angezeigt wird, anzuzeigen.

2. Informationsverarbeitungsvorrichtung (1) nach Anspruch 1, wobei der Prozessor (11) konfiguriert ist:
in einem Fall, in dem sich ein Cursor über dem Anweisungsbild befindet, Anzeigen des Dokumentenbildes zu starten.

3. Informationsverarbeitungsvorrichtung (1) nach Anspruch 1, wobei der Prozessor (11) konfiguriert ist:
das Dokumentbild an einem Mittelabschnitt in dem Bereich zum Anzeigen des Dokumentenbildes anzuzeigen, und das Menübild in einem Endbereich des Bereichs zum Anzeigen des Dokumentbildes anzuzeigen.

4. Informationsverarbeitungsvorrichtung (1) nach einem der Ansprüche 1 bis 3, wobei der Prozessor (11) konfiguriert ist:
das Menübild an einer Position nahe dem Anweisungsbild anzuzeigen.

5. Informationsverarbeitungsvorrichtung (1) nach Anspruch 1 oder 2, wobei der Prozessor (11) konfiguriert ist:
Anzeige des Menübildes auf der Grundlage einer Position eines von dem Benutzer bedienten Cursors ändern.

6. Informationsverarbeitungsvorrichtung (1) nach Anspruch 5, wobei der Prozessor (11) konfiguriert ist:
das Menübild in dem Bereich zum Anzeigen des Dokumentenbildes anzeigen; und
in einem Fall, in dem die Position des Cursors sich nicht in dem Bereich zum Anzeigen des Dokumentenbildes befindet, das Menübild nicht anzuzeigen.

7. Informationsverarbeitungsvorrichtung (1) nach Anspruch 5, wobei der Prozessor (11) konfiguriert ist:
das Menübild in dem Bereich zum Anzeigen des Dokumentenbildes anzeigen; und
eine Transparenz des Menübildes auf der Grundlage davon, ob die Position des Cursors sich über dem Menübild befindet oder nicht, ändern.

8. Informationsverarbeitungsvorrichtung (1) nach Anspruch 7, wobei der Prozessor (11) konfiguriert ist:
in einem Fall, in dem sich die Position des Cursors nicht über dem Menübild befindet, das Menübild transparent anzuzeigen.

9. Informationsverarbeitungsvorrichtung (1) nach Anspruch 7, wobei der Prozessor (11) konfiguriert ist:
in einem Fall, in dem die Position des Cursors sich über dem Menübild befindet, das Menübild anzuzeigen, indem eine Transparenz als die Transparenz des Menübildes in einem Fall, in dem sich die Position des Cursors nicht über dem Menübild befindet, gesenkt wird.

10. Informationsverarbeitungsvorrichtung (1) nach Anspruch 1 oder 2, wobei der Prozessor (11) konfiguriert ist:
Anzeige des Menübildes auf der Grundlage einer Größe des Bedienungsbildschirms (400) zu ändern.

11. Informationsverarbeitungsvorrichtung (1) nach Anspruch 10, wobei der Prozessor (11) konfiguriert ist:
in einem Fall, in dem der Bedienungsbildschirm (400) kleiner als ein vorbestimmter Wert ist, eine Form des Menübildes zu ändern und das Menübild anzuzeigen.

12. Informationsverarbeitungsvorrichtung (1) nach Anspruch 10, wobei der Prozessor (11) konfiguriert ist:
in einem Fall, in dem der Bedienungsbildschirm (400) kleiner als ein vorbestimmter Wert ist und ein Teilbereich des Menübildes angezeigt wird, den anzuzeigenden Bereich des Menübildes zu verschieben.

13. Informationsverarbeitungsvorrichtung (1) nach Anspruch 1 oder 2, wobei der Prozessor (11) konfiguriert ist:
in einem Fall, in dem das Dokument mehrere Seiten aufweist, die Anzeigeposition des Menübildes selbst in einem Fall, in dem die in dem Dokumentenbild anzuzeigende Seite geändert wird, nicht zu ändern.

14. Informationsverarbeitungsvorrichtung (1) nach Anspruch 13, wobei der Prozessor (11) konfiguriert ist:
ein Änderungsschaltflächenbild, das ein Bild ist, das in einem Bereich des Menübildes anzuzeigen ist, und eine Bedienung des Änderns der in dem Dokumentenbild anzuzeigenden Seite von dem Benutzer akzeptiert.

15. Programm, das einen Computer veranlasst zu realisieren:
eine Funktion des Anzeigens eines Anweisungsbildes zum Annehmen einer Anweisung eines Benutzers zu einem Dokument auf einem Bedienungsbildschirm (400) zum Annehmen einer Bedienung durch den Benutzer;
eine Funktion des Anzeigens eines Dokumentenbildes, das sich auf das Dokument bezieht, gemäß der Bedienung des Benutzers an einer Anzeigeposition des Anweisungsbildes anzuzeigen, wobei das Dokument ein Bild zusätzlich zu einem Text enthält oder nur das Bild enthält, ohne den Text zu enthalten; und
eine Funktion des Anzeigens eines Menübildes zum Annehmen der Bedienung des Benutzers an dem Dokumentenbild an einer Position, die durch die Anzeigeposition des Anweisungsbildes auf dem Bedienungsbildschirm (400) bestimmt ist; wobei das Programm ferner den Computer veranlasst, zu realisieren:
eine Funktion des Anzeigens des Menübildes in einem Bereich zum Anzeigen des Dokumentenbildes,
wobei die Funktion des Anzeigens des Menübildes in dem Bereich zum Anzeigen des Dokumentenbildes umfasst:
in einem Fall, in dem sich die Anzeigeposition des Anweisungsbildes über dem Bereich zum Anzeigen des Dokumentenbildes befindet, Anzeigen des Menübildes auf einer Oberseite in dem Bereich zum Anzeigen des Dokumentenbildes;
in einem Fall, in dem die Anzeigeposition des Anweisungsbildes sich unterhalb des Bereichs zum Anzeigen des Dokumentenbildes befindet, Anzeigen des Menübildes auf einer Unterseite in dem Bereich, in dem das Dokumentenbild angezeigt wird;
in einem Fall, in dem die Anzeigeposition des Anweisungsbildes sich links von dem Bereich zum Anzeigen des Dokumentenbildes befindet, Anzeigen des Menübildes auf einer linken Seite in dem Bereich zum Anzeigen des Dokumentenbildes; und
in einem Fall, in dem die Anzeigeposition des Anweisungsbildes sich rechts von dem Bereich zum Anzeigen des Dokumentbildes befindet, Anzeigen des Menübildes auf einer rechten Seite in dem Bereich, in dem das Dokumentenbild angezeigt wird.

16. Informationsverarbeitungsverfahren, umfassend:
Anzeigen eines Anweisungsbildes zum Annehmen einer Anweisung eines Benutzers zu einem Dokument auf einem Bedienungsbildschirm (400) zum Annehmen einer Bedienung durch den Benutzer;
Anzeigen eines Dokumentenbildes, das sich auf das Dokument bezieht, gemäß der Bedienung des Benutzers an einer Anzeigeposition des Anweisungsbildes, wobei das Dokument ein Bild zusätzlich zu einem Text enthält oder nur das Bild enthält, ohne den Text zu enthalten;
Anzeigen eines Menübildes zum Annehmen der Bedienung des Benutzers an dem Dokumentenbild an einer Position, die durch die Anzeigeposition des Anweisungsbildes auf dem Bedienungsbildschirm (400) bestimmt ist; und
Anzeigen des Menübildes in einem Bereich zum Anzeigen des Dokumentenbildes wobei das Verfahren **dadurch gekennzeichnet ist, dass**
der Schritt des Anzeigens des Menübildes in dem Bereich zum Anzeigen des Dokumentenbildes umfasst:
in einem Fall, in dem sich die Anzeigeposition des Anweisungsbildes über dem Bereich zum Anzeigen des Dokumentenbildes befindet, Anzeigen des Menübildes auf einer Oberseite in dem Bereich zum Anzeigen des Dokumentenbildes;
in einem Fall, in dem die Anzeigeposition des Anweisungsbildes sich unterhalb des Bereichs zum Anzeigen des Dokumentenbildes befindet, Anzeigen des Menübildes auf einer Unterseite in dem Bereich, in dem das Dokumentenbild angezeigt wird;
in einem Fall, in dem die Anzeigeposition des Anweisungsbildes sich links von dem Bereich zum Anzeigen des Dokumentenbildes befindet, Anzeigen des Menübildes auf einer linken Seite in dem Bereich zum Anzeigen des Dokumentenbildes; und
in einem Fall, in dem die Anzeigeposition des Anweisungsbildes sich rechts von dem Bereich zum Anzeigen des Dokumentbildes befindet, Anzeigen des Menübildes auf einer rechten Seite in dem Bereich, in dem das Dokumentenbild angezeigt wird.

## Revendications

1. Appareil de traitement d'informations (1) comprenant : un processeur (11) configuré pour :
afficher une image d'instruction (411) pour accepter une instruction d'un utilisateur concernant un document (410) sur un écran d'opération (400) pour accepter une opération par l'utilisateur ;
afficher une image de document (420) liée au document en fonction de l'opération de l'utilisateur sur une position d'affichage de l'image d'instruction, dans lequel le document comprend une image en plus d'un texte, ou comprend uniquement l'image sans comprendre le texte ;
afficher une image de menu (430) pour accepter l'opération de l'utilisateur sur l'image de document à une position déterminée par la position d'affichage de l'image d'instruction sur l'écran d'opération (400) ; et
afficher l'image de menu dans une zone d'affichage de l'image de document,
l'appareil de traitement d'informations (1) étant **caractérisé en ce que** le processeur (11) est en outre configuré pour :
dans un cas où la position d'affichage de l'image d'instruction est située au-dessus de la zone d'affichage de l'image de document, afficher l'image de menu sur un côté supérieur de la zone d'affichage de l'image de document ;
dans un cas où la position d'affichage de l'image d'instruction est en dessous de la zone d'affichage de l'image de document, afficher l'image de menu sur un côté inférieur de la zone où l'image de document est affichée ;
dans un cas où la position d'affichage de l'image d'instruction est située à gauche de la zone d'affichage de l'image de document, afficher l'image de menu sur un côté gauche de la zone d'affichage de l'image de document ; et
dans un cas où la position d'affichage de l'image d'instruction est située à droite de la zone d'affichage de l'image de document, afficher l'image de menu sur un côté droit de la zone où l'image de document est affichée.

2. Appareil de traitement d'informations (1) selon la revendication 1, dans lequel le processeur (11) est configuré pour :
dans un cas où un curseur est situé sur l'image d'instruction, commencer à afficher l'image de document.

3. Appareil de traitement d'informations (1) selon la revendication 1, dans lequel le processeur (11) est configuré pour :
afficher l'image de document dans une partie centrale de la zone d'affichage de l'image de document, et afficher l'image de menu dans une zone d'extrémité de la zone d'affichage de l'image de document.

4. Appareil de traitement d'informations (1) selon l'une quelconque des revendications 1 à 3, dans lequel le processeur (11) est configuré pour :
afficher l'image de menu à une position proche de l'image d'instruction.

5. Appareil de traitement d'informations (1) selon la revendication 1 ou la revendication 2, dans lequel le processeur (11) est configuré pour :
modifier l'affichage de l'image de menu sur la base d'une position d'un curseur manipulé par l'utilisateur.

6. Appareil de traitement d'informations (1) selon la revendication 5, dans lequel le processeur (11) est configuré pour :
afficher l'image de menu dans la zone d'affichage de l'image de document ; et
dans un cas où la position du curseur n'est pas dans la zone d'affichage de l'image de document, ne pas afficher l'image de menu.

7. Appareil de traitement d'informations (1) selon la revendication 5, dans lequel le processeur (11) est configuré pour :
afficher l'image de menu dans la zone d'affichage de l'image de document ; et
modifier une transparence de l'image de menu selon que la position du curseur est ou non sur l'image de menu.

8. Appareil de traitement d'informations (1) selon la revendication 7, dans lequel le processeur (11) est configuré pour :
dans un cas où la position du curseur n'est pas sur l'image de menu, afficher l'image de menu de manière transparente.

9. Appareil de traitement d'informations (1) selon la revendication 7, dans lequel le processeur (11) est configuré pour :
dans un cas où la position du curseur est sur l'image de menu, afficher l'image de menu en réduisant une transparence plus que la transparence de l'image de menu dans un cas où la position du curseur n'est pas sur l'image de menu.

10. Appareil de traitement d'informations (1) selon la revendication 1 ou la revendication 2, dans lequel le processeur (11) est configuré pour :
modifier l'affichage de l'image de menu sur la base de une taille de l'écran d'opération (400).

11. Appareil de traitement d'informations (1) selon la revendication 10, dans lequel le processeur (11) est configuré pour :
dans un cas où l'écran de opération (400) est plus petit qu'une valeur prédéterminée,
modifier une forme de l'image de menu et afficher l'image de menu.

12. Appareil de traitement d'informations (1) selon la revendication 10, dans lequel le processeur (11) est configuré pour :
dans un cas où l'écran d'opération (400) est plus petit qu'une valeur prédéterminée et qu'une zone partielle de l'image de menu est affichée, décaler la zone à afficher de l'image de menu.

13. Appareil de traitement d'informations (1) selon la revendication 1 ou la revendication 2, dans lequel le processeur (11) est configuré pour :
dans un cas où le document comporte une pluralité de pages, ne pas modifier la position d'affichage de l'image de menu même dans un cas où la page à afficher dans l'image de document est modifiée.

14. Appareil de traitement d'informations (1) selon la revendication 13, dans lequel le processeur (11) est configuré pour :
afficher une image de bouton de changement qui est une image à afficher dans une zone de l'image de menu et accepte une opération de changement de la page à afficher dans l'image de document de l'utilisateur.

15. Programme amenant un ordinateur à réaliser :
une fonction d'affichage d'une image d'instruction pour accepter une instruction d'un utilisateur concernant un document sur un écran d'opération (400) pour accepter une opération par l'utilisateur ;
une fonction d'affichage d'une image de document liée au document en fonction de l'opération de l'utilisateur sur une position d'affichage de l'image d'instruction, dans lequel le document comprend une image en plus d'un texte, ou comprend uniquement l'image sans comprendre le texte ; et
une fonction d'affichage d'une image de menu pour accepter l'opération de l'utilisateur sur l'image du document à une position déterminée par la position d'affichage de l'image d'instruction sur l'écran d'opération (400) ; le programme étant **caractérisé en outre en ce qu'**il amène l'ordinateur à réaliser :
une fonction d'affichage de l'image de menu dans une zone d'affichage de l'image de document,
dans lequel la fonction d'affichage de l'image de menu dans la zone d'affichage de l'image de document comprend :
dans un cas où la position d'affichage de l'image d'instruction est située au-dessus de la zone d'affichage de l'image de document, afficher l'image de menu sur un côté supérieur de la zone d'affichage de l'image de document ;
dans un cas où la position d'affichage de l'image d'instruction est en dessous de la zone d'affichage de l'image de document, afficher l'image de menu sur un côté inférieur de la zone où l'image de document est affichée ;
dans un cas où la position d'affichage de l'image d'instruction est située à gauche de la zone d'affichage de l'image de document, afficher l'image de menu sur un côté gauche de la zone d'affichage de l'image de document ; et
dans un cas où la position d'affichage de l'image d'instruction est située à droite de la zone d'affichage de l'image de document, afficher l'image de menu sur un côté droit de la zone où l'image de document est affichée.

16. Procédé de traitement d'informations comprenant :
afficher une image d'instruction pour accepter une instruction d'un utilisateur concernant un document sur un écran d'opération (400) pour accepter une opération par l'utilisateur ;
afficher une image de document liée au document en fonction de l'opération de l'utilisateur sur une position d'affichage de l'image d'instruction, dans lequel le document comprenant une image en plus d'un texte, ou comprend uniquement l'image sans comprendre le texte ;
afficher une image de menu pour accepter l'opération de l'utilisateur sur l'image de document à une position déterminée par la position d'affichage de l'image d'instruction sur l'écran d'opération (400) ; et
afficher l'image de menu dans une zone d'affichage de l'image de document le procédé étant **caractérisé en ce que**
l'étape d'affichage de l'image de menu dans la zone d'affichage de l'image de document comprend :
dans un cas où la position d'affichage de l'image d'instruction est située au-dessus de la zone d'affichage de l'image de document, afficher l'image de menu sur un côté supérieur de la zone d'affichage de l'image de document ;
dans un cas où la position d'affichage de l'image d'instruction est en dessous de la zone d'affichage de l'image de document, afficher l'image de menu sur un côté inférieur de la zone où l'image de document est affichée ;
dans un cas où la position d'affichage de l'image d'instruction est située à gauche de la zone d'affichage de l'image de document, afficher l'image de menu sur un côté gauche de la zone d'affichage de l'image de document ; et
dans un cas où la position d'affichage de l'image d'instruction est située à droite de la zone d'affichage de l'image de document, afficher l'image de menu sur un côté droit de la zone où l'image de document est affichée.
